# FASCICULE DE BREVET EUROPEEN

(11) **EP 3 971 425 B1**
(45) Date de publication et mention de la délivrance du brevet: **17.07.2024**
(21) Numéro de dépôt: 21197095.9
(22) Date de dépôt: 16.09.2021
(51) Int. Cl.: F16B 5/12, F16B 5/06, B60R 13/02

(54) **PROCÉDÉ D'ASSEMBLAGE D'UN PANNEAU À UN PROFILÉ TECHNIQUE POUR FORMER UN ÉLÉMENT D'INTÉRIEUR DE VÉHICULE DE TRANSPORT PUBLIC**
VERFAHREN ZUR MONTAGE EINER PLATTE AN EINEM TECHNISCHEN PROFIL ZUR BILDUNG EINES INNENELEMENTS EINES ÖFFENTLICHEN VERKEHRSMITTELS
METHOD FOR MOUNTING A PANEL TO A TECHNICAL PROFILE FOR FORMING AN ELEMENT OF THE INSIDE OF A PUBLIC TRANSPORT VEHICLE

(30) Priorité: 17.09.2020 FR 2009432
(43) Date de publication de la demande: 23.03.2022
(73) Titulaire: ALSTOM Holdings, 93400 Saint-Ouen-sur-Seine (FR)
(72) Inventeur: BAVANDI, Ismaël, 59200 TOURCOING (FR)
(74) Mandataire: Lavoix

(56) Documents cités:
- EP-A1- 0 552 647
- EP-A1- 2 194 205
- CN-A- 109 278 871
- FR-A1- 2 437 521
- FR-A1- 2 761 313
- FR-A1- 2 997 914
- JP-A- H08 282 395
- US-A- 5 830 559

## Description

La présente invention concerne un procédé d'assemblage d'un panneau à un profilé technique, pour former un élément d'intérieur, tel qu'un plafond, et notamment un élément d'intérieur de véhicule de transport public.

On connaît un procédé d'assemblage d'un panneau à un profilé technique pour former un élément d'intérieur de véhicule de transport public en employant de la colle. Cependant, la colle utilisée nécessite une durée de réticulation élevée, ce qui ralentit la cadence de production. Par ailleurs, lorsqu'une maintenance doit être effectuée, le profilé technique et le panneau doivent être démontés et remplacés, rendant ainsi l'opération fastidieuse.

US 5 830 559 et CN 109 278 871 décrivent par exemple des procédé d'assemblage d'un panneau pour former un élément intérieur de véhicule de transport.

Un des objectifs de la présente invention est de pallier les inconvénients ci-dessus en proposant un procédé d'assemblage simplifié entre un profilé technique et un panneau pour former un élément d'intérieur de véhicule de transport public.

A cet effet, l'invention a pour objet un procédé d'assemblage selon la revendication 1.

Le procédé selon l'invention peut comporter en outre l'une ou plusieurs des caractéristiques des revendications 2 à 4.

La présente invention a également pour objet un ensemble selon la revendication 5.

Un ensemble selon l'invention peut comporter en outre l'une ou plusieurs des caractéristiques des revendications 6 à 8.

La présente invention a également pour objet un véhicule de transport public selon la revendication 9.

L'invention sera mieux comprise à la lumière de la description qui va suivre, donnée uniquement à titre d'exemple et faite en se référant aux figures annexées, parmi lesquelles :
- les Figures 1 à 3 représentent un profilé technique et un panneau lors des étapes du procédé d'assemblage ;
- les Figures 4 et 5 représentent des variantes de l'assemblage de la Figure 3 ; et
- la Figure 6 représente un assemblage comprenant un profilé technique, un panneau et une traverse transversale.

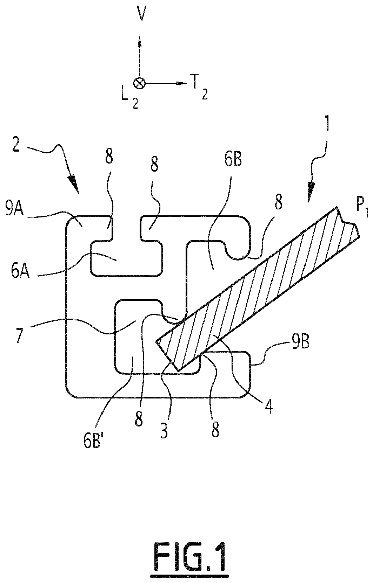

On a représenté sur la Figure 1 un panneau 1 convenant pour un intérieur, notamment un intérieur de véhicule de transport public, et un profilé technique 2 en cours d'assemblage par le procédé selon l'invention.

Le panneau 1 s'étend principalement suivant une première direction longitudinale L1.

Le panneau 1 présente typiquement une forme de parallélépipède rectangle. Cependant, le panneau 1 peut présenter toute autre forme techniquement envisageable, par exemple le panneau 1 peut être incurvé au centre.

De préférence, le panneau 1 est réalisé en tout matériau techniquement convenant pour un intérieur de véhicule de transport public.

Le panneau 1 convient par exemple pour un plafond, un sol ou un mur d'intérieur de véhicule de transport public.

Par exemple, le panneau 1 est réalisé en HPL (acronyme anglais pour « High Pressure Laminate »), en matériau thermoplastique, en matériau isolant tel que le polyuréthane injecté (PUR), et/ou en métal tel qu'en aluminium.

Le panneau 1 est par exemple en nid d'abeilles.

Le panneau 1 est délimité suivant une première direction transversale T1 perpendiculaire à la première direction longitudinale L1 par au moins une extrémité 3, l'extrémité 3 comprenant au moins une zone 4 de liaison avec le profilé technique 2.

De préférence, le panneau 1 est dépourvu d'usinage ou de pliage dans cette zone 4 de liaison.

Il est ici entendu que le panneau 1 conserve sa forme dans la zone 4 de liaison, en particulier ne présente aucune déformation dans cette zone 4 de liaison, ou aucune forme singulière. Notamment, le panneau 1 n'a pas subi d'opération de retrait de matière par une machine-outil dans la zone 4 de liaison.

En effet, le procédé selon l'invention ne nécessite pas d'usinage du panneau 1 préalablement à la fixation du profilé technique 2 au panneau 1, ni de mise en forme du panneau 1.

Le profilé technique 2 s'étend principalement suivant une seconde direction longitudinale L2.

Le profilé technique 2 présente de préférence une forme générale de parallélépipède rectangle. Cependant, d'autres formes sont envisageables pour le profilé technique 2.

Par exemple, le profilé technique 2 présente une longueur définie suivant la seconde direction longitudinale L2 comprise entre 500 mm et 6000 mm.

Le profilé technique 2 est réalisé de préférence en métal, plus particulièrement en aluminium.

Le profilé technique 2 présente au moins une rainure 6 de réception de l'extrémité 3 du panneau 1.

La rainure 6 de réception s'étend principalement suivant la seconde direction longitudinale L2.

De préférence, la rainure 6 de réception s'étend sur toute la longueur du profilé technique 2 selon la seconde direction longitudinale L2.

La rainure 6 de réception délimite un volume 7 de réception de l'extrémité 3 du panneau 1.

La rainure 6 de réception présente des butées 8 ne permettant l'insertion de l'extrémité 3 du panneau 1 que dans une position d'insertion P1 dans laquelle l'extrémité 3 du panneau 1 est mobile dans le volume 7 de réception de la rainure 6 de réception, les butées 8 coopérant avec le panneau 1 dans une position verrouillée P2, dans laquelle l'extrémité 3 du panneau 1 est verrouillée en translation dans au moins deux directions autres que la seconde direction longitudinale L2, la position d'insertion P1 formant un angle avec la position verrouillée P2 compris entre 5° et 40°,

Le profilé technique 2 comporte une pluralité de faces 9. Au moins une face 9 du profilé technique 2 présente une rainure 6 de réception d'un panneau 1. De préférence, au moins deux faces 9 présentent une rainure 6 de réception. Dans l'exemple représenté, une première face 9A du profilé technique 2 présente une rainure 6A de réception, et une deuxième face 9B présente deux rainures 6B, 6B' de réception.

Les deux rainures 6B, 6B' de réception de la deuxième face 9B sont disposées en enfilade selon une deuxième direction transversale T2 perpendiculaire à la seconde direction longitudinale L2. En d'autres termes, il est nécessaire de traverser la rainure 6B de réception la plus superficielle pour accéder à la rainure 6B' de réception moins superficielle.

On définit une largeur WB, WB' de la rainure 6B, 6B' selon une direction verticale V perpendiculaire à la deuxième direction longitudinale L2 et à la deuxième direction transversale T2.

De préférence, la rainure 6B de réception la plus superficielle est plus large que la rainure 6B' moins superficielle.

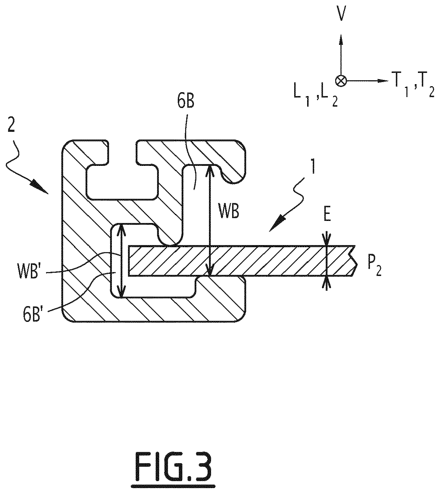

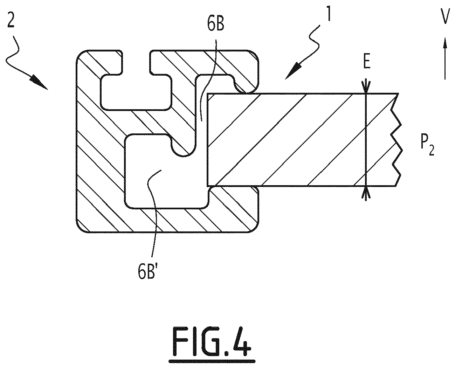

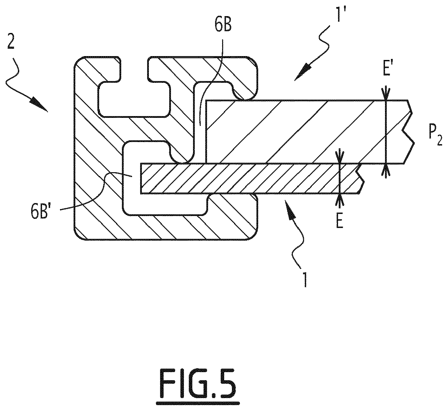

De cette façon, le profilé technique 2 peut recevoir un panneau 1 dans l'une des rainures 6B, 6B' de réception en fonction d'une épaisseur E du panneau 1 prise suivant la direction verticale V comme représenté sur les Figures 3 et 4, ou bien simultanément deux panneaux 1, 1' d'épaisseur E, E' différente, comme représenté sur la Figure 5.

Le procédé selon l'invention s'applique ainsi à des panneaux de diverses épaisseurs.

En variante non représentée, les deux rainures de réception sont juxtaposées.

Les butées 8 forment des rebords réduisant localement le volume 7 de réception de l'extrémité libre du panneau et appliquant localement une compression sur le panneau en position verrouillée.

Ainsi, lorsque l'extrémité 3 d'un panneau 1 est en position verrouillée P2 dans la rainure 6 de réception, l'extrémité 3 est compressée localement par les butées 8.

Un procédé d'assemblage du profilé technique 2 et du panneau 1 pour former un élément d'intérieur de véhicule de transport public va maintenant être décrit.

Comme visible sur la Figure 1, le procédé comprend une étape d'insertion de l'extrémité 3 du panneau 1 dans le volume 7 de réception de la rainure 6 de réception du profilé technique 2.

La rainure 6 de réception est choisie en fonction de l'épaisseur E du panneau 1.

Le panneau 1 ainsi inséré se trouve dans la position d'insertion P1 formant un angle compris entre 5° et 40°avec le panneau 1 dans la position verrouillée P2.

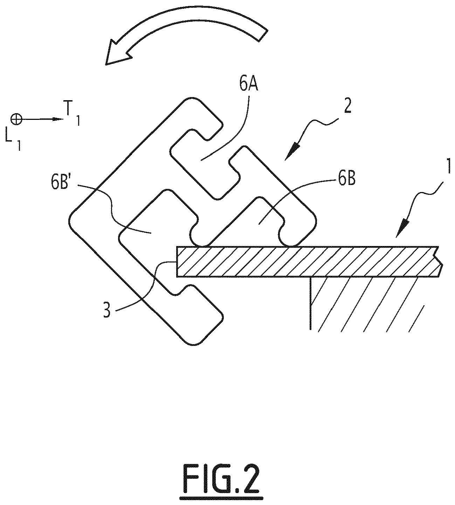

Le procédé comprend ensuite une étape de rotation, représentée sur la Figure 2, dans laquelle le profilé technique 2 et/ou le panneau 1 effectue une rotation d'un angle compris entre 5° et 40° autour de la seconde direction longitudinale L2.

A la suite de cette rotation, l'extrémité 3 du panneau 1 se trouve localement compressée par les butées 8, comme représenté sur la Figure 3.

Le panneau 1 est en position verrouillée P2. Une telle position verrouillée P2 est stable et évite un glissement, un affaissement ou une désolidarisation du panneau 1 par rapport au profilé technique 2.

Si nécessaire, des forces opposées sont appliquées du panneau 1 vers le profilé technique 2 et du profilé technique 2 vers le panneau 1, après l'étape de rotation, pour clipser le panneau 1 et le profilé technique 2.

La zone 4 de liaison du panneau 1 au profilé technique 2 est ainsi dépourvue de colle.

Le profilé technique 2 et le panneau 1 en position verrouillée P2 forment un ensemble 12 d'intérieur, notamment de véhicule de transport public. De préférence, le panneau 1 et le profilé technique 2 forment un élément de plafond de véhicule de transport public. En variante, le panneau 1 et le profilé technique 2 forment un élément mural, ou de sol de véhicule de transport public.

Le véhicule de transport public est par exemple un tramway, un train, un train à grande vitesse, un autobus.

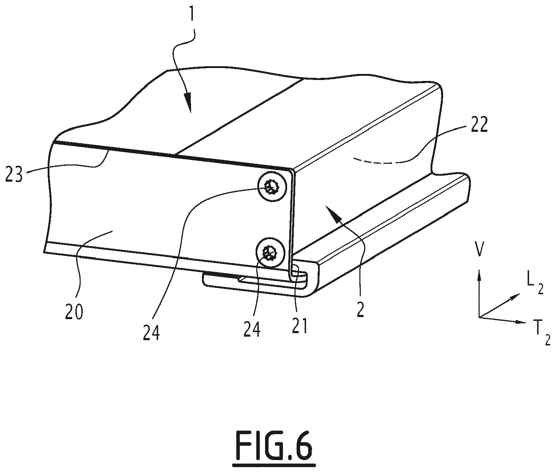

De préférence, le procédé comprend en outre une étape de fixation d'une traverse transversale 20 à une extrémité longitudinale 21 du profilé technique 2 comme représenté sur la Figure 6.

La traverse transversale 20 ainsi fixée verrouille le panneau 1 en translation selon la seconde direction longitudinale L2.

De préférence, le panneau 1 comprend deux bords longitudinaux 22, et le procédé comprend l'assemblage d'un profilé technique 2 sur chaque bord longitudinal 22 du panneau 1.

Selon ce mode de réalisation, la traverse transversale 20 est assemblée sur un bord transversal 23 du panneau 1, la traverse transversale 20 s'étendant d'un profilé technique 2 à l'autre profilé technique 2.

La traverse transversale 20 est par exemple fixée au moyen de vis 24 au bord transversal 23 du panneau 1.

La traverse transversale 20 est par exemple réalisée en tôlerie ou fonderie d'aluminium, d'acier ou d'inox.

Ainsi, le procédé d'assemblage entre un panneau et un profilé technique pour former un élément d'intérieur de véhicule de transport public selon l'invention est simple à réaliser, rapide et peu coûteux. Il ne nécessite pas l'emploi de colle, ni l'usinage ou le pliage du panneau. A titre de comparaison, le procédé selon l'invention permet l'assemblage en moins de dix minutes, contre environ deux heures et 45 minutes pour un procédé d'assemblage par de la colle comprenant une durée de réticulation de la colle.

En cas de maintenance, le démontage de l'ensemble 12 est aisé.

La traverse transversale 20 est démontée. La traverse transversale 20 est typiquement dévissée lorsqu'elle est fixée au moyen de vis 24.

Puis l'assemblage entre chaque profilé technique 2 et le panneau 1 est démonté en effectuant une rotation du profilé technique 2 ou du panneau 1 autour de la seconde direction longitudinale L2 dans le sens inverse de la rotation effectuée pour placer le panneau 1 de la position d'insertion P1 à la position verrouillée P2.

L'assemblage est donc réversible sans endommager les pièces qui le composent. En outre, d'un point de vue écologique, l'absence de colle augmente la possibilité de recyclage des matériaux utilisés pour réaliser l'ensemble 12.

## Revendications

1. Procédé d'assemblage d'un panneau (1) à un profilé technique (2) pour former un élément d'intérieur, tel qu'un plafond, de préférence un élément d'intérieur de véhicule de transport public, le procédé comprenant au moins les étapes suivantes :
(a) la fourniture d'au moins un panneau (1) convenant pour un intérieur, de préférence de véhicule de transport public, le panneau (1) s'étendant principalement suivant une première direction longitudinale (L1) et étant délimité suivant une première direction transversale (T1) perpendiculaire à la première direction longitudinale (L1) par au moins une extrémité (3), l'extrémité (3) comprenant au moins une zone de liaison avec un profilé technique (2), le panneau (1) étant dépourvu d'usinage ou de pliage dans cette zone (4) de liaison,
(b) la fourniture du profilé technique (2), ce profilé technique (2) s'étendant principalement suivant une seconde direction longitudinale (L2) et présentant au moins une rainure (6, 6A, 6B) de réception de l'extrémité (3) du panneau (1), la rainure (6, 6A, 6B) de réception s'étendant principalement suivant la seconde direction longitudinale (L2), et délimitant un volume (7) de réception de l'extrémité (3) du panneau (1), la rainure (6, 6A, 6B) de réception présentant des butées (8) ne permettant l'insertion de l'extrémité (3) du panneau (1) que dans une position d'insertion (P1) dans laquelle l'extrémité (3) du panneau (1) est mobile dans le volume (7) de réception de la rainure (6, 6A, 6B) de réception, les butées (8) coopérant avec le panneau (1) dans une position verrouillée (P2), dans laquelle l'extrémité (3) du panneau (1) est verrouillée en translation dans au moins deux directions autres que la seconde direction longitudinale (L2), la position d'insertion (P1) formant un angle avec la position verrouillée (P2) compris entre 5° et 40°,
le profilé technique comportant une pluralité de faces (9), dont une deuxième face (9B) présentant deux rainures (6B, 6B') de réception, les deux rainures (6B, 6B') de réception de la deuxième face (9B) étant disposées en enfilade selon une deuxième direction transversale (T2) perpendiculaire à la seconde direction longitudinale (L2), chaque rainure (6B, 6B') présentant une largeur (WB, WB') selon une direction verticale (V) perpendiculaire à la seconde direction longitudinale (L2) et à la deuxième direction transversale (T2), la rainure (6B) de réception la plus superficielle étant de préférence plus large que la rainure (6B') moins superficielle,
(c) l'insertion de l'extrémité (3) du panneau (1) dans la rainure (6, 6A, 6B) formée par le profilé technique (2) en position d'insertion (P1), et
(d) la rotation du panneau (1) et/ou du profilé technique (2) autour de la seconde direction longitudinale (L2) pour faire passer le panneau (1) de la position d'insertion (P1) à la position verrouillée (P2) et former un ensemble (12) comprenant le panneau (1) et le profilé technique (2).

2. Procédé d'assemblage selon la revendication 1, dans lequel les butées (8) forment des rebords réduisant localement le volume (7) de réception de l'extrémité (3) libre du panneau (1) et appliquant localement une compression sur le panneau (1) en position verrouillée (P2).

3. Procédé d'assemblage selon la revendication 1 ou 2, comprenant en outre une étape de fixation d'une traverse transversale (20) à une extrémité (3) longitudinale du profilé technique (2) pour verrouiller le panneau (1) en translation selon la seconde direction longitudinale (L2).

4. Procédé d'assemblage selon la revendication 3, dans lequel la traverse transversale (20) est assemblée à l'ensemble (12) formé par le panneau (1) et le profilé technique (2) par au moins une vis (24).

5. Ensemble (12) comprenant un panneau (1) convenant pour un intérieur, de préférence de véhicule de transport public, et un profilé technique (2) assemblés selon le procédé de l'une quelconque des revendications précédentes, **caractérisé en ce que** la zone (4) de liaison du panneau (1) au profilé technique (2) est dépourvue de colle.

6. Ensemble (12) selon la revendication 5, comprenant le panneau (1) et deux profilés techniques (2), chaque profilé technique (2) étant assemblé sur un bord longitudinal (22) du panneau (1).

7. Ensemble (12) selon la revendication 6, comprenant au moins une traverse transversale (20) assemblée sur un bord transversal du panneau (1), la traverse transversale (20) s'étendant d'un profilé technique (2) à l'autre profilé technique (2).

8. Ensemble (12) selon l'une quelconque des revendications 5 à 7, formant un élément de plafond de véhicule de transport public.

9. Véhicule de transport public comprenant au moins un ensemble selon l'une quelconque des revendications 5 à 8.

## Patentansprüche

1. Verfahren zur Montage einer Platte (1) an einem technischen Profil (2), um ein Innenelement zu bilden, wie z. B. eine Decke, vorzugsweise ein Innenelement eines öffentlichen Verkehrsmittels, das Verfahren umfassend mindestens die folgenden Schritte:
(a) Bereitstellen mindestens einer Platte (1), die für einen Innenraum, vorzugsweise eines öffentlichen Verkehrsmittels, geeignet ist, wobei sich die Platte (1) hauptsächlich entlang einer ersten Längsrichtung (L1) erstreckt und entlang einer ersten Querrichtung (T1) senkrecht zu der ersten Längsrichtung (L1) durch mindestens ein Ende (3) begrenzt ist, das Ende (3) umfassend mindestens einen Verbindungsbereich mit einem technischen Profil (2), wobei die Platte (1) in diesem Verbindungsbereich (4) keine Bearbeitung oder Biegung aufweist,
(b) Bereitstellen des technischen Profils (2), wobei sich dieses technische Profil (2) hauptsächlich in einer zweiten Längsrichtung (L2) erstreckt und mindestens eine Aufnahmenut (6, 6A, 6B) des Endes (3) der Platte (1) aufweist, sich die Aufnahmenut (6, 6A, 6B) hauptsächlich entlang der zweiten Längsrichtung (L2) erstreckt und ein Aufnahmevolumen (7) des Endes (3) der Platte (1) begrenzt, die Aufnahmenut (6, 6A, 6B) Anschläge (8) aufweist, die das Einführen des Endes (3) der Platte (1) nur in einer Einführposition (P1) zulassen, in der das Ende (3) der Platte (1) in dem Aufnahmevolumen (7) der Aufnahmenut (6, 6A, 6B) beweglich ist, die Anschläge (8) mit der Platte (1) in einer verriegelten Position (P2) zusammenwirken, in der das Ende (3) der Platte (1) gegen eine Translation in mindestens zwei anderen Richtungen als der zweiten Längsrichtung (L2) verriegelt ist, wobei die Einführposition (P1) einen Winkel mit der verriegelten Position (P2) zwischen 5° und 40° bildet,
das technische Profil umfassend eine Vielzahl von Flächen (9), wovon eine zweite Fläche (9B) zwei Aufnahmenuten (6B, 6B') aufweist, wobei die zwei Aufnahmenuten (6B, 6B') der zweiten Seite (9B) in einer zweiten Querrichtung (T2) senkrecht zu der zweiten Längsrichtung (L2) aneinandergereiht angeordnet sind, jede Nut (6B, 6B') eine Breite (WB, WB') in einer vertikalen Richtung (V) senkrecht zu der zweiten Längsrichtung (L2) und der zweiten Querrichtung (T2) aufweist, wobei die oberflächlichere Aufnahmenute (6B) vorzugsweise breiter ist als die weniger oberflächliche Nut (6B'),
(c) Einführen des Endes (3) der Platte (1) in die Nut (6, 6A, 6B), die von dem technischen Profil (2) in der Einführposition (P1) gebildet ist, und
(d) Drehen der Platte (1) und/oder des technischen Profils (2) um die zweite Längsrichtung (L2), um die Platte (1) aus der Einführposition (P1) in die verriegelte Position (P2) zu bewegen und eine Anordnung (12) zu bilden, umfassend die Platte (1) und das technische Profil (2).

2. Montageverfahren nach Anspruch 1, wobei die Anschläge (8) Ränder bilden, die das Aufnahmevolumen (7) des freien Endes (3) der Platte (1) lokal verringern und in der verriegelten Position (P2) lokal eine Kompression auf die Platte (1) ausüben.

3. Montageverfahren nach Anspruch 1 oder 2, ferner umfassend einen Schritt eines Befestigens einer Quertraverse (20) an einem Längsende (3) des technischen Profils (2), um die Platte (1) gegen eine Translation in der zweiten Längsrichtung (L2) zu verriegeln.

4. Montageverfahren nach Anspruch 3, wobei die Quertraverse (20) durch mindestens eine Schraube (24) mit der aus der Platte (1) und dem technischen Profil (2) gebildeten Anordnung (12) verbunden ist.

5. Anordnung (12), umfassend eine Platte (1), die für einen Innenraum, vorzugsweise eines öffentlichen Verkehrsmittels, geeignet ist, und ein technisches Profil (2), die nach dem Verfahren eines der vorhergehenden Ansprüche montiert sind, **dadurch gekennzeichnet, dass** der Verbindungsbereich (4) der Platte (1) mit dem technischen Profil (2) frei von Klebstoff ist.

6. Anordnung (12) nach Anspruch 5, umfassend die Platte (1) und zwei technische Profile (2), wobei jedes technische Profil (2) an einer Längskante (22) der Platte (1) montiert ist.

7. Anordnung (12) nach Anspruch 6, umfassend mindestens eine Quertraverse (20), die an einer Querkante der Platte (1) montiert ist, wobei sich die Quertraverse (20) von einem technischen Profil (2) zu dem anderen technischen Profil (2) erstreckt.

8. Anordnung (12) nach einem der Ansprüche 5 bis 7, die ein Deckenelement für ein öffentliches Verkehrsmittel bildet.

9. Öffentliches Verkehrsmittel, umfassend mindestens eine Anordnung nach einem der Ansprüche 5 bis 8.

## Claims

1. A method for assembling a panel (1) to a technical profile (2) to form an interior element, such as a ceiling, preferably an interior element of a public transport vehicle, the method comprising at least the following steps:
(a) providing at least one panel (1) suitable for an interior, preferably of a public transport vehicle, the panel (1) extending mainly along a first longitudinal direction (L1) and being delimited along a first transverse direction (T1) perpendicular to the first longitudinal direction (L1) by at least one end (3), the end (3) comprising at least one zone for connection with a technical profile (2), the panel (1) not being machined or folded in this connection zone (4),
(b) providing the technical profile (2), this technical profile (2) extending mainly in a second longitudinal direction (L2) and having at least one groove (6, 6A, 6B) for receiving the end (3) of the panel (1), the receiving groove (6, 6A, 6B) extending mainly in the second longitudinal direction (L2), and delimiting a volume (7) for receiving the end (3) of the panel (1), the receiving groove (6, 6A, 6B) having stops (8) allowing insertion of the end (3) of the panel (1) only in an insertion position (P1) wherein the end (3) of the panel (1) is movable in the receiving volume (7) of the receiving groove (6, 6A, 6B), the stops (8) co-operating with the panel (1) in a locked position (P2), wherein the end (3) of the panel (1) is locked against translation in at least two directions other than the second longitudinal direction (L2), the insertion position (P1) forming an angle with the locked position (P2) of between 5° and 40°,
the technical profile comprising a plurality of faces (9), including a second face (9B) having two receiving grooves (6B, 6B'), the two grooves (6B, 6B') for receiving the second face (9B) being arranged in a row in a second transverse direction (T2) perpendicular to the second longitudinal direction (L2), each groove (6B, 6B') having a width (WB, WB') in a vertical direction (V) perpendicular to the second longitudinal direction (L2) and to the second transverse direction (T2), the shallower receiving groove (6B) preferably being wider than the less shallow groove (6B'),
(c) inserting the end (3) of the panel (1) into the groove (6, 6A, 6B) formed by the technical profile (2) in the insertion position (P1), and
(d) rotating the panel (1) and/or the technical profile (2) about the second longitudinal direction (L2) to move the panel (1) from the insertion position (P1) to the locked position (P2) and form an assembly (12) comprising the panel (1) and the technical profile (2).

2. The assembly method according to claim 1, wherein the stops (8) form flanges locally reducing the volume (7) for receiving the free end (3) of the panel (1) and locally applying compression to the panel (1) in the locked position (P2).

3. The assembly method according to claim 1 or 2, further comprising a step of attaching a transverse crosspiece (20) to a longitudinal end (3) of the technical profile (2) to lock the panel (1) in translation in the second longitudinal direction (L2).

4. The assembly method according to claim 3, wherein the transverse crosspiece (20) is joined to the assembly (12) formed by the panel (1) and the technical profile (2) by at least one screw (24).

5. An assembly (12) comprising a panel (1) suitable for an interior, preferably of a public transport vehicle, and a technical profile (2) assembled according to the method of any one of the preceding claims, **characterised in that** the zone (4) for connecting the panel (1) to the technical profile (2) is free of adhesive.

6. The assembly (12) according to claim 5, comprising the panel (1) and two technical profiles (2), each technical profile (2) being assembled on a longitudinal edge (22) of the panel (1).

7. The assembly (12) according to claim 6, comprising at least one transverse crosspiece (20) assembled on a transverse edge of the panel (1), the transverse crosspiece (20) extending from one technical profile (2) to the other technical profile (2).

8. The assembly (12) according to any one of claims 5 to 7, forming a ceiling element for a public transport vehicle.

9. A public transport vehicle comprising at least one assembly according to any of claims 5 to 8.
